# FASCICULE DE BREVET EUROPEEN

(11) **EP 4 480 019 B1**
(45) Date de publication et mention de la délivrance du brevet: **29.04.2026**
(21) Numéro de dépôt: 23709749.8
(22) Date de dépôt: 10.02.2023
(51) Int. Cl.: H01M 4/24, H01M 10/26

(54) **GÉNÉRATEURS ÉLECTROCHIMIQUES ALCALINS À ANODE DE ZINC**
ALKALISCHE ELEKTROCHEMISCHE ZELLEN MIT ZINKANODE
ALKALINE ELECTROCHEMICAL CELLS WITH ZINC ANODE

(30) Priorité: 17.02.2022 FR 2201375
(43) Date de publication de la demande: 25.12.2024
(73) Titulaire: SUNERGY, 93110 Rosny-sous-Bois (FR)
(72) Inventeur: FOURGEOT, Fabrice, 94120 Fontenay-sous-Bois (FR); MIRHASHEMIHAGHIGHI, Shadi, 93110 Rosny-sous-Bois (FR)
(74) Mandataire: Stona, Daniel
(86) Numéro de dépôt international: PCT/IB2023/051209
(87) Numéro de publication internationale: WO 2023/156889

(56) Documents cités:
- EP-A1- 3 780 244
- CN-A- 111 048 846
- CN-B- 105 304 945
- CN-B- 110 729 482
- US-A- 5 401 590
- M. A. DEYAB: "Application of nonionic surfactant as a corrosion inhibitor for zinc in alkaline battery solution", JOURNAL OF POWER SOURCES, vol. 292, 19 May 2015 (2015-05-19), pages 66 - 71, XP029135636, ISSN: 0378-7753, DOI: 10.1016/J.JPOWSOUR.2015.05.040

## Description

La présente invention concerne le domaine des générateurs électrochimiques alcalins et plus particulièrement celui des accumulateurs. Elle est spécialement relative aux générateurs secondaires à anode de zinc tels que nickel-zinc, zinc-dioxyde de manganèse, argent-zinc, zinc-air, ainsi que ceux comportant une cathode totalement soluble ou partiellement soluble tels que zinc-iode, zinc-brome, zinc-ferricyanure, zinc-oxyde de manganèse et est destinée à obtenir avec l'électrode de zinc un nombre élevé de cycles.

### Etat de la technique

Les caractéristiques énergétiques du zinc (820 Ah/kg, 5845 Ah/I), son électronégativité (1,65V), son faible coût et sa facilité à être recyclé, en font un matériau d'anode de générateur électrochimique particulièrement intéressant : ainsi, les énergies massiques théoriques des couples nickel-zinc et zinc-air sont respectivement de 334 Wh/kg et 1.320 Wh/kg. En pratique, l'énergie massique des accumulateurs nickel-zinc peut atteindre 80 Wh/kg en format prismatique, soit deux à trois fois celle des accumulateurs au plomb.

Toutefois, si le zinc trouve une utilisation massive dans les piles alcalines et les piles Leclanché^{®}, il est absent des accumulateurs alcalins de format industriel, à l'exception des batteries argent-zinc dont l'usage se limite à quelques cycles, et qui sont utilisées principalement pour des applications militaires, et plus récemment des premiers accumulateurs industriels nickel-zinc.

Le zinc est soluble en milieu alcalin sous forme de zincates et forme aisément, lors de la charge des accumulateurs à anode de zinc, des croissances dendritiques qui sont à l'origine de courts-circuits entre les électrodes de polarités opposées.

En outre, les zones de l'électrode négative où se dépose le zinc évoluent au cours des cycles de charge et de décharge : ainsi, on observe des phénomènes de densification qui réduisent la porosité de l'électrode et par conséquent sa capacité à fonctionner à des densités de courant correspondant à un usage pratique des batteries. D'autres facteurs pénalisent l'anode de zinc, tels que la précipitation d'oxyde de zinc formant une couche qui passive et réduit la surface active de l'électrode.

De nombreux travaux ont été menés pour comprendre les mécanismes de dépôt et de dissolution du zinc en milieu alcalin et un grand nombre de brevets proposant des solutions diverses ont été déposés :
- l'usage d'additifs ajoutés à l'électrolyte ou incorporés dans la matière active anodique, avec l'objectif de réduire la solubilité des zincates, constitue l'essentiel des brevets ;
- sont également décrits des procédés mécaniques qui permettent de faire circuler l'électrolyte seul ou une électrode de zinc dispersée dans l'électrolyte, pour éviter les croissances dendritiques en assurant un dépôt de zinc homogène ;
- l'utilisation de courants pulsés, sans ou avec inversion de polarité, permettant de dissoudre au moins partiellement les dendrites ;
- enfin, l'emploi de séparateurs qui limitent la formation ou suppriment la diffusion des ions zincates de l'anode vers la cathode : ce sont par exemple des séparateurs microporeux en couches multiples ou des membranes échangeuses.

Ces diverses techniques peuvent être mises en œuvre isolément ou en combinaisons, mais elles n'apportent qu'une partie de la solution, et selon les cas augmentent la résistance interne, renchérissent le coût de la batterie, ou sont complexes à mettre en œuvre. Par ailleurs, certaines recommandent l'addition de plomb ou de cadmium à la masse active de l'anode, ce qui n'est guère acceptable pour des raisons évidentes de pollution.

Des progrès ont été réalisés en ajoutant des additifs à l'électrolyte constitué principalement de potasse, comme c'est le cas des petits accumulateurs cylindriques nickel-zinc (NiZn) disponibles sur le marché. Néanmoins, le nombre de cycles obtenus ne répond pas aux besoins d'usage des batteries industrielles et des batteries pour les applications stationnaires, qui doivent au moins assurer respectivement 1 000 et 2 000 cycles de charges et décharges profondes, correspondant à 80% de profondeur de décharge et plus.

Une première avancée singulière a été apportée par l'addition de céramiques conductrices, préférentiellement de nitrure de titane (TiN), à l'électrode de zinc, innovation décrite par le brevet FR 2 788 887 (déposé le 27 janvier 1999 par la société SCPS) permettant de dépasser 1000 cycles à 80% de profondeur de décharge et au-delà. Une deuxième avancée remarquable a été apportée par l'addition de SiO₂ dans l'électrolyte, innovation décrite par le brevet FR 3 099 851 (déposé le 9 août 2019 par la société Sunergy) permettant de dépasser 2 000 cycles à 80% de profondeur de décharge et au-delà.

La perte de capacité des accumulateurs NiZn en cyclage est historiquement corrélée principalement à la formation de dendrites de zinc qui in fine forment un court-circuit. Cette formation de dendrites a été supprimée à la suite des travaux de SCPC relatifs au brevet susmentionné FR 2 788 887 permettant la réalisation de plus 1.000 cycles. Par la suite, la perte de la capacité des accumulateurs NiZn a été induite par la redistribution, la densification de la matière active, l'assèchement et la passivation des électrodes de zinc. Une nouvelle réponse à ces limites de la stabilité des accumulateurs NiZn a été démontrée avec les travaux de Sunergy relatif au brevet susmentionné FR 3 099 851 permettant de dépasser 2.000 cycles et plus. Avec l'augmentation de la stabilité de l'électrode de zinc, la perte de la capacité a été associée à d'autres paramètres en plus de ceux déjà mentionnés, comme la stabilité des propriétés hydrophiles de la membrane.

L'objet de la présente invention est d'apporter une réponse nouvelle aux limites d'aptitude des accumulateurs à base d'électrode de zinc à fournir un grand nombre de cycles, réponse apportée en stabilisant les propriétés hydrophiles de la membrane tout en conservant les avancées ayant permis d'atteindre plus de 2 000 cycles.

Pour ce faire, des essais concernent l'addition d'agents mouillants dans l'électrolyte. L'idée est d'améliorer la surface de contact solide - liquide pour la matière active des électrodes de nickel et de zinc et de prévenir une dégradation possible des propriétés hydrophiles de la membrane. L'hypothèse est que les agents mouillants solubles ou en suspension dans l'électrolyte finissent pour une partie à s'accrocher dans la porosité de la membrane, permettant à la membrane de conserver ses propriétés hydrophiles plus longtemps.

L'examen de l'état de l'art des systèmes à anode de zinc, montre qu'il existe plusieurs brevets et études mentionnant l'emploi d'agents mouillants. Pour exemple, Rossler et al. dans le brevet US 4 195 120, déposé le 3 novembre 1978, déclare que l'évolution de l'hydrogène dans les cellules ayant des anodes de zinc est réduit ou éliminé en incorporant dans la cellule un agent mouillant qui est un polymère oxyde d'éthylène, alkyle adduct ester phosphate. Cet agent mouillant est ajouté de telle manière que, directement ou lors du mouillage de l'anode par l'électrolyte, il y ait une adsorption de l'agent mouillant à sur la surface du matériau d'anode de zinc, ce qui empêche le dégagement d'hydrogène. L'agent mouillant est présent de manière souhaitable dans la cellule en une quantité de 0,001 % à 5 % en poids du composant zinc de la cellule. L'agent mouillant décrit ici est soluble ou dispersable dans l'eau et l'électrolyte alcalin. L'agent mouillant est ajouté soit directement à l'électrode de zinc, soit indirectement à l'électrolyte ou la cathode. Via l'électrolyte, l'agent mouillant peut se déposer sur la surface du zinc, tandis que via la cathode, l'agent mouillant peut traverser la membrane pour se déposer sur le zinc.

Dans la demande de brevet chinois CN111048846 déposée le 18 décembre 2019, il est mentionné qu'un agent mouillant sélectionné parmi le lauryl-sulfate de sodium, le dodécyl-benzène sulfonate de sodium, le bromure de cétyl-triméthyl-ammonium, le chlorure d'octadécyl-triméthyl-ammonium, le bromure de tétrabutyl-ammonium, un ou plusieurs composés parmi l'hydroxyde de tétrabutyl-ammonium, le chlorure de tétrabutyl-ammonium, un tensioactif perfluoré permet(tent) d'améliorer l'aptitude à augmenter le nombre de cycles de charge et décharge de 100 à 600 en réduisant les limitations habituelles, court-circuit, dissolution, déformation, densification, passivation de l'électrode de zinc et évolution d'hydrogène.

Un article de 1998 de JiLing Zhu et al. (Journal of Power Sources 72 1998 231-235) mentionne les effets de différents types d'agents mouillants ioniques perfluorés dont l'agent mouillant à chaîne hydrocarbonée CTAB sur l'électrochimie examinée sur le comportement du zinc. Les résultats montrent que ces agents mouillants peuvent être utilisés comme substitut du mercure pour diminuer la corrosion dans les piles au zinc. Il est également montré que le dépôt de zinc en présence de ces agents mouillants peut être amélioré dans une certaine mesure. La morphologie du zinc électrodéposé montre que ces agents peuvent apporter des dépôts plus uniformes et compacts et, par conséquent, réduire la croissance dendritique. FC-170C et les CTAB sont les inhibiteurs les plus efficaces. Ces agents mouillants ioniques restent accrochés au zinc lors des fortes polarisations qui sont associées à une évolution d'hydrogène, ce qui n'est pas le cas des agents mouillants non ioniques. Les agents mouillants de type cationique peuvent être adsorbés par l'attraction électrostatique entre le groupe polaire des molécules et la surface de l'électrode de zinc, de sorte que le taux d'évolution d'hydrogène augmente plus lentement en présence de FC-135 ou CTAB lorsque le potentiel de l'électrode de zinc est plus négatif que -1.80 V. Les décalages du potentiel de début de dépôt et du potentiel au maximum du courant cathodique indiquent que le dépôt de zinc est inhibé dans une certaine mesure en présence d'agents mouillants. La raison en est que les agents mouillants s'adsorbent sur la surface de l'électrode de zinc pour former une couche qui présente un effet inhibiteur sur le processus d'électro-réduction des ions zincates. Par conséquent, ces agents mouillants peuvent ralentir le taux de zinc déposé de zincates pendant la charge de l'électrode et, ainsi, atténuer la croissance des dendrites. Un article de 2015 de M.A Deyab (Journal of Power Sources 292 (2015) 66-71) mentionne les effets du polyoxyéthylène (40) nonylphényl éther en tant que tensioactif non ionique (PNE) comme inhibiteur de corrosion dans l'électrolyte alcalin (7,0 M KOH).

Le document CN 105 304 945 B divulgue un électrolyte polymère alcalin pour batterie nickel-zinc, comprenant une solution aqueuse alcaline à base de KOH ou NaOH à haute concentration, ainsi qu'un surfactant de type ionique ou non-ionique et un agent antimousse.

Le document US 5 401 590 A se réfère à l'utilisation d'un mélange comprenant au moins un surfactant anionique et un surfactant non-ionique, comme additif au sein d'une électrode de zinc pour une cellule électrochimique alcaline, afin d'empêcher l'apparition d'une instabilité de la tension de charge et de contrôler la formation de gaz hydrogène.

Le document CN 110 729 482 B décrit un additif pour l'électrode négative d'une batterie alcaline sèche de type zinc-manganèse, comprenant un agent antimousse et un agent mouillant.

Les recherches de l'état de l'art mentionnant l'addition d'agents mouillants sont toutes en relation avec la recherche d'une réduction de l'évolution d'hydrogène couplée à la corrosion du zinc.

### Exposé sommaire de l'invention

L'invention a pour but de proposer des générateurs électrochimiques alcalins rechargeables à anode de zinc permettant d'obtenir une amélioration de la stabilité de la capacité des accumulateurs et un accroissement de leur durée de vie en cyclage.

Ce but est atteint notamment grâce à un renforcement et une stabilisation des propriétés hydrophiles de la membrane, ce qui permet une réduction des tensions de surface et améliore le contact de l'électrolyte sur les surfaces solides.

Plus concrètement, l'invention a trait à un générateur électrochimique alcalin à anode de zinc selon l'énonciation 1 suivante :
1. Générateur électrochimique alcalin à anode de zinc contenant un électrolyte qui est une solution aqueuse alcaline dont la molarité est comprise entre 4M et 15M d'anions hydroxyles et qui comprend :
   a) au moins un agent mouillant à une concentration comprise entre 0,1g/l et 50g/l d'électrolyte ; et
   b) au moins un agent antimousse en une quantité comprise entre 10 mg et 1000 mg par kilogramme d'électrolyte,
caractérisé en ce que :
- l'électrolyte comprend l'agent mouillant ionique qui est le phosphate de bis(2-éthylhexyle); et/ou
- l'électrolyte comprend au moins un agent mouillant non ionique choisi parmi les polyglucosides d'alkyle et les éthers de polyéthylène glycol et d'alkylphénol; et/ou
- les agents antimousse sont choisis parmi les polyorganosiloxanes.

Des caractéristiques avantageuses du générateur électrochimique alcalin à anode de zinc de l'énonciation 1 précitée sont indiquées dans les énonciations 2 à 8 suivantes :
2. Générateur électrochimique alcalin à anode de zinc selon l'énonciation 1, dans lequel en ce qu'il comprend au moins un agent mouillant ionique et au moins un agent mouillant non ionique.
3. Générateur électrochimique alcalin à anode de zinc selon l'énonciation 1 ou 2, dans lequel en ce que la molarité de la solution alcaline est comprise entre 7 et 12 M.
4. Générateur électrochimique alcalin à anode de zinc selon l'une des énonciations 1 à 3,
   dans lequel en ce que la concentration du ou des agents mouillants dans l'électrolyte est comprise entre 1 g/l et 25 g/l.
5. Générateur électrochimique alcalin à anode de zinc selon l'une des énonciations 1 à 4,
   dans lequel en ce que la concentration des agents antimousse dans l'électrolyte est de 100 mg à 500 mg par kilogramme d'électrolyte.
6. Générateur électrochimique alcalin à anode de zinc selon l'une des énonciations 1à 5,
   dans lequel en ce que l'électrolyte contient en outre des silicates.
7. Générateur électrochimique alcalin à anode de zinc selon l'une des énonciations 1 à 6,
   dans lequel en ce que l'électrolyte contient en outre des zincates.
8. Générateur électrochimique alcalin à anode de zinc selon l'une des énonciations 1 à 7,
   dans lequel en ce que l'électrolyte contient en outre des borates, des phosphates et/ou des fluorures.

Selon un autre aspect, l'invention a trait également à un procédé de préparation d'un générateur électrochimique alcalin à anode de zinc précité, conforme à l'énonciation 9 suivante :
9. Procédé de préparation d'un générateur électrochimique alcalin à anode de zinc selon l'une des énonciations 1 à 8, comprenant une étape d'introduction d'hydroxydes de lithium, de sodium et/ou de potassium lors de la préparation de l'électrolyte.

D'autres caractéristiques et avantages de l'invention vont maintenant être décrits en détail dans l'exposé suivant qui est donné en référence aux figures annexées, lesquelles représentent schématiquement :
[Fig. 1] : courbes des capacités mesurées en décharge d'éléments NiZn, 8Ah en cyclage, charge 8A en 1 heure, décharge 8A 1V, profondeur de décharge 100% ;
[Fig. 2] : courbes des capacités mesurées en décharge d'éléments NiZn 8 Ah en cyclage, charge 8A en 1 heure, décharge 8A 1V, profondeur de décharge 100% ; et
[Fig. 3] : courbes des capacités mesurées en décharge d'éléments NiZn 8Ah en cyclage, charge 8A en 1 heure, décharge 8A1V, profondeur de décharge 100%.

### Exposé détaillé de l'invention

L'accumulateur à anode de zinc est réalisé selon les méthodes connues de l'homme de l'art. Les électrodes sont sous forme de plaques, constituées d'un collecteur de courant et d'une masse active. La masse active peut incorporer des composés qui n'interviennent pas dans la réaction électrochimique, mais vont assurer par exemple une fonction de conduction électronique ou une liaison mécanique entre les éléments actifs et le collecteur, ou encore une fonction de rétention d'un produit de la réaction électrochimique.

Dans le cas de l'anode de zinc, outre les polymères tels que PTFE, polyéthylène glycol, alcool polyvinylique, polymère styrène-butadiène, carboxy-méthyl cellulose ..., qui assurent la fonction de liant des constituants de l'électrode, de l'hydroxyde de calcium peut être utilisé pour limiter la formation de zincates solubles, ainsi que des céramiques conductrices comme décrit dans le brevet FR 2 788 887.

Un séparateur isole les compartiments anodiques et cathodiques : c'est un feutre, une membrane poreuse ou échangeuse d'ions, feutre et membrane poreuse pouvant être associés. La membrane est généralement une membrane polymère hydrophobe qui est modifiée pour devenir hydrophile par l'addition d'un ou plusieurs agents mouillants.

Selon le mode de fabrication, l'accumulateur à anode de zinc peut être de format prismatique, cylindrique, ou se présenter sous forme d'une cellule de type filtre-presse si la batterie est de type bipolaire.

La présente invention est notamment applicable à la fabrication d'un accumulateur nickel-zinc, conçu selon les caractéristiques principales décrites ci-après.

Selon un mode préférentiel de réalisation, on réalise un accumulateur nickel-zinc en associant une électrode de nickel de type plastifié et une électrode de zinc contenant également un liant organique.

### 1) Electrode de nickel

L'électrode de nickel peut être avantageusement réalisée en utilisant comme collecteur une mousse métallique de nickel à pores très fins. Certaines de ces mousses sont désignées comme "battery grade". Les fournisseurs en sont par exemple la société Sumitomo Electric (Japon) et la société Corun (Chine). L'épaisseur de la mousse est choisie en fonction de la capacité surfacique souhaitée de l'électrode de nickel : elle est généralement comprise entre 1,2 et 2 mm, mais elle peut être laminée pour ajuster précisément l'épaisseur à la capacité surfacique souhaitée.

La matière active est constituée d'hydroxyde de nickel qui contient de préférence en outre du zinc et du cobalt co-précipités. Les particules sont préférentiellement de forme sphérique ou sphéroïdale pour augmenter la capacité volumique. Elles peuvent être recouvertes d'oxyde et d'hydroxyde de cobalt qui, lors de la formation de l'accumulateur, se transforment en oxy-hydroxyde de cobalt conducteur (Oshitani et al. J. Electrochem. Soc. 1989 136, 6, 1590).

On peut également ajouter à la poudre d'hydroxyde de nickel des additifs conducteurs (fibres, poudres métalliques).

Une pâte est préparée en mélangeant les constituants décrits ci-dessus et de l'eau permutée dans laquelle a été ajoutée de la carboxyméthyl cellulose. Un liant polymère, comme le PTFE, peut-être ajouté à ce stade de la fabrication sous forme de suspension, ou ultérieurement après avoir rempli le collecteur, en particulier la mousse de nickel, avec la pâte active par trempage dans la suspension.

Le remplissage de la mousse de nickel peut s'effectuer à l'échelle du laboratoire à l'aide d'une racle qui fait pénétrer la pâte dans l'épaisseur du support, et à l'échelle industrielle par injection sous pression de la pâte dans la mousse.

Après séchage, l'électrode est comprimée afin d'assurer la cohésion entre collecteur, masse active et additifs et découpée aux dimensions souhaitées.

### 2) Electrode de zinc

Le collecteur de l'électrode de zinc peut se présenter sous forme de feuillard métallique perforé, de toile tissée, de feuillard expansé ou de mousse métallique. Le cuivre est préféré en raison de sa conductivité, mais doit être recouvert d'un métal protecteur : zinc, étain, ou alliage.

L'électrode de zinc est fabriquée en préparant au préalable une pâte constituée d'oxyde de zinc et d'additifs divers :
Des conducteurs électroniques : zinc métallique, carbone, cuivre, céramiques conductrices..., sous forme de poudres ou de filaments.
Des agents anti-corrosion : indium, bismuth...
Des composés qui réagissent avec les zincates : hydroxydes de calcium, de baryum ...

La phase liquide est de l'eau permutée ou de l'alcool, dans laquelle a été ajoutée de la carboxy-méthyl cellulose comme liant et épaississant. D'autres liants peuvent être ajoutés comme ceux mentionnés dans la demande brevet EP 1 715 536.

Il est possible, en fonction de la technique choisie, de fabriquer une pâte à forte viscosité qui peut être appliquée par pression sur les deux faces du support métallique pour constituer une structure "sandwich", de fabriquer une pâte de moyenne viscosité dans laquelle le collecteur est plongé, puis en est ressorti en éliminant l'excès de pâte pour ajuster l'épaisseur de l'électrode à l'aide d'une racle, opération qui est suivie d'un séchage. Enfin, il est possible d'utiliser une poudre sèche mélangée à un liant et de la comprimer sur le support métallique pour constituer l'électrode.

### 3) L'électrolyte

L'électrolyte utilisé est de préférence une solution concentrée alcaline dont la molarité est comprise entre 4 et 15 M (4 et 15 moles/I), de préférence 4 et 12 M d'anions hydroxyles. L'alcalinité est apportée par des hydroxydes de potassium, sodium et lithium, pris individuellement ou en mélange.

L'électrolyte peut également contenir des zincates et des silicates dans des proportions variables, comme mentionné dans le brevet FR 3 099 851. L'électrolyte peut également contenir des borates, des phosphates, et des fluorures, pris séparément ou en mélange, comme décrit par exemple dans le brevet US 5 215 836.

Selon la présente invention, la quantité d'agents mouillants ajoutés à l'électrolyte est comprise entre 0,1 g/l et 50 g/l et de préférence entre 1 g/l et 25 g/l d'électrolyte ; la quantité d'agents antimousse ajoutés à l'électrolyte, exprimée en mg par kg d'électrolyte, est comprise entre 10 mg à 1000 mg.

Les agents mouillants sont notamment sélectionnés parmi l'agent mouillant ionique, le phosphate de bis(2-éthylhexyle) et les agents mouillants non ioniques à partir des alkyles polyglucosides, notamment ceux de marque Triton^{®}. Les agents antimousse sont sélectionnés à partir de produits qui se réfèrent à la famille chimique des polyorganosiloxanes. Ces agents mouillants et antimousse peuvent être utilisés séparément ou en mélanges.

Afin d'illustrer la mise en évidence du fonctionnement et la définition de la présente invention, des éléments NiZn de 1 à 11, de capacité nominale 8Ah sont réalisés de manière identique suivant la description générale fournie ci-dessus. Les éléments 1 à 4 ont une électrode de zinc de composition différente des éléments 5 à 11. Tous les éléments ont des électrodes de nickel identiques. L'électrolyte utilisé est une solution concentrée alcaline dont la molarité est 10 M d'anions hydroxyles avec une addition de silicate comme décrit dans le brevet FR 3 099 851. L'électrolyte est modifié pour les éléments 3, 4 et 8 à 11 par des additions d'agents mouillants et d'agents antimousse. Les éléments sont montés avec une soupape basse pression de 0,2 bar. Les accumulateurs ont été cyclés à courant constant 8A, équivalent au régime de C avec une charge d'une heure correspondant à 100% de charge et une décharge complète qui se termine quand la tension atteint 1V. Les paramètres qui différentient les éléments 1 à 11, ainsi que le nombre de cycles atteint pour une capacité supérieure à 70% de la capacité nominale (Cn) sont résumés dans le tableau 1 ci-dessous.

**Tableau 1 : caractéristiques des accumulateurs NiZn, capacité nominale 8Ah, cyclés charge 8A 1h, décharge à 100% 8A 1V, le symbole > indique que l'expérience est toujours en cours.**

| Elément | Electrolyte | Membrane | Electrode de zinc | Agents mouillants | Agents antimousse | Perte de masse (%) à 2000 cycles | Nombre de cycles C>70%Cn |
|---|---|---|---|---|---|---|---|
| | | | | (g/l) | (mg/kg d'électrolyte) | | |
| 1 | 10M silicates | A | 1 | non | non | 8% | 2240 |
| 2 | 10M silicates | B | 1 | non | non | -- | 0 |
| 3 | 10M silicates | B | 1 | 21,3 | non | 44% | 2180 |
| 4 | 10M silicates | A | 1 | 21,3 | 100 | 21% | >3500 |
| 5 | 10M silicates | A | 2 | non | non | 18% à 1600 cycles | 1740 |
| 6 | 10M silicates | A | 2 | 21,3 | 100 | 57% | 2500 |
| 7 | 10M silicates | A | 2 | 21,3 | 100 | 45% | 3400 |
| 8 | 10M silicates | A | 2 | 10,65 | 200 | 11.8% | 2120 |
| 9 | 10M silicates | A | 2 | 7,1 | 200 | 9.3% | 2220 |
| 10 | 10M silicates | A | 2 | 5,3 | 200 | 13% | 2520 |
| 11 | 10M silicates | A | 2+ | 10,65 | 200 | 4% | >3350 |

### Exemple 1 (témoins) :

Des éléments NiZn de 1 à 4 de capacité nominale 8Ah sont réalisés de manière identique suivant la description générale fournie ci-dessus. Les éléments 1 à 4 ont une électrode de zinc de composition différente des éléments 5 à 11. Tous les éléments ont des électrodes de nickel identiques. L'électrolyte utilisé est une solution concentrée alcaline dont la molarité est 10M d'anions hydroxyles avec une addition de silicate comme décrit dans le brevet FR 3 099 851.

Deux membranes A et B ont été utilisées pour ces éléments. La membrane A est un microporeux de polypropylène d'épaisseur 25µm avec un agent mouillant additionné. La respirabilité de cette membrane A, exprimé en Guerley est relativement haute, supérieure à 1000, lui permettant d'être une barrière de gaz pour la stabilité thermique, en limitant la recombinaison de l'oxygène à la surface de l'électrode de zinc. Cette membrane couvre l'électrode de zinc par deux couches de membrane l'une sur l'autre créant une barrière d'une épaisseur de 50µm. La membrane B est un microporeux de polypropylène d'épaisseur 40µm additionné d'un agent mouillant. La respirabilité de cette membrane B, exprimé en Guerley est plus faible que celle de la membrane A, comprise entre 450-750. Cette large gamme suggère des défauts d'homogénéité dans la couche d'agent mouillant additionné. Cette membrane B couvre la surface de l'électrode de zinc par une seule couche.

L'élément 1, monté avec la membrane A, démontre un nombre de cycle de 2240 cycles avant que sa capacité ne devienne inférieure à 70% de 8Ah. L'élément 2, monté avec la membrane B, conduit à une capacité nulle après l'étape de formation caractérisée par 3 cycles de charge au régime de C/10 pendant 12h et de décharge au régime de C/5 jusqu'à ce que la tension de l'accumulateur atteigne 1,2V.

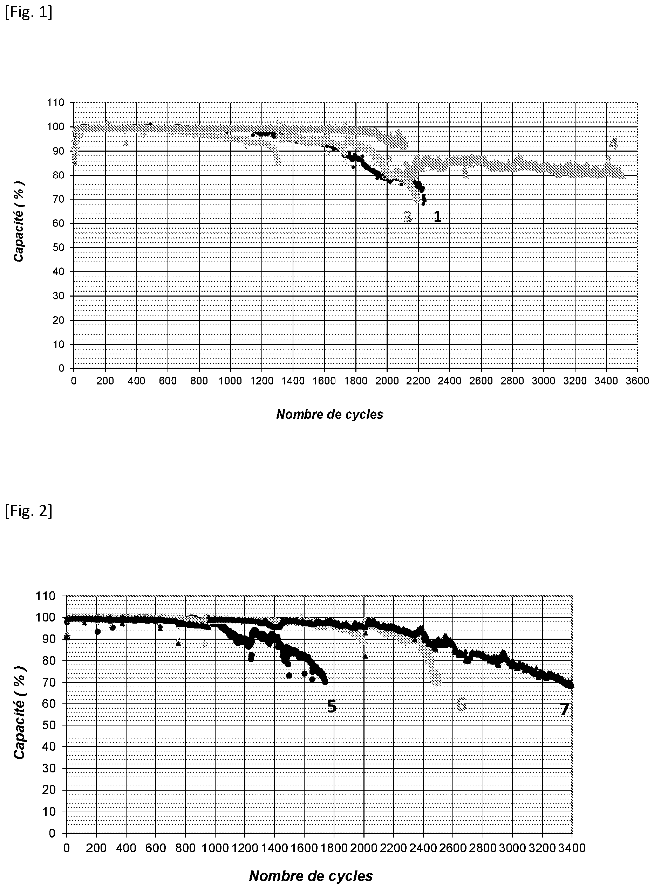

L'élément 3 est l'élément 2 précédent après avec une addition dans l'électrolyte de 4 agents mouillants parmi lesquels trois sont de la marque TRITON^{®}, le BG-10, CG-110, X-100 plus l'agent mouillant phosphate de bis(2-éthylhexyle). La concentration totale des 4 agents mouillants introduits dans l'élément 2, qui devient donc ainsi l'élément 3, est 21,3 g/l. Aucun agent antimousse n'est ajouté. Les capacités déchargées en fonction du nombre de cycles pour les accumulateurs 1 et 3 sont comparées sur la figure 1.

A la suite de l'addition des agents mouillants, l'élément 2 qui avait démontré une capacité nulle, et devenant l'élément 3, réalise 2180 cycles, comparables au résultat de l'élément 1. Les agents mouillants additionnés dans l'électrolyte ont donc été capables de se déposer in situ dans la cellule sur la membrane, permettant à cette membrane auparavant incompatible, d'être fonctionnelle et d'autoriser une durée de vie similaire à celle obtenue avec la membrane A ; membrane A qui ne présente pas de défaut évident d'accroche de son agent mouillant. Cette première expérience est donc concluante sur la capacité des agents mouillants introduits dans l'électrolyte à se fixer à la membrane et à restaurer ses propriétés hydrophiles.

Cependant deux problèmes incompatibles avec un fonctionnement pérenne ont été constatés, le premier étant la formation de mousse en grande quantité, capable de sortir des accumulateurs en impliquant des fuites, le second consistant en des pertes de masse nettement plus importantes. Ainsi, après 2000 cycles, les éléments 1 et 3 ont perdu respectivement 8% et 44% de leur masse d'électrolyte. Au-delà d'environ 20% de perte massique d'électrolyte, des additions d'eau sont souhaitables pour éviter une chute de la capacité par asséchement des accumulateurs.

### Exemple 2 (invention) :

L'élément 4 de capacité nominale 8Ah est réalisé de manière identique suivant la description générale fournie ci-dessus. L'éléments 4 est identique à l'élément 1 concernant les électrodes de zinc et de nickel et la membrane A. L'électrolyte utilisé est une solution concentrée alcaline dont la molarité est 10M d'anions hydroxyles avec une addition de silicate comme décrit dans le brevet FR 3 099 851, à laquelle sont ajoutés 4 agents mouillants parmi lesquels 3 sont de la marque TRITON^{®}, le BG-10, CG-110, X-100 plus l'agent mouillant phosphate de bis(2-éthylhexyle). La concentration totale des 4 agents mouillants est 21,3 g/l. Un agent antimousse de la famille chimique des polyorganosiloxanes est ajouté à l'électrolyte, à raison de 100mg par kilogramme d'électrolyte. L'accumulateur a été cyclé à courant constant 8A, équivalent au régime de C avec une charge d'une heure et une décharge qui se termine quand la tension atteint 1V.

Les capacités déchargées en fonction du nombre de cycles pour les accumulateurs 1, 3 et 4 sont comparées sur la figure 1. Même si la membrane A ne présente pas de défaut évident d'accroche de son agent mouillant, le résultat obtenu de plus de 3500 cycles, démontre que les agents mouillants introduits dans l'électrolyte améliorent significativement la durée de vie en cyclage de cet accumulateur, les agents mouillants introduits dans l'électrolyte ayant la capacité de se fixer à la membrane A et maintenant ou restaurant les propriétés hydrophiles de celle-ci. L'addition de l'agent antimousse a permis de réduire fortement la formation de mousse. La perte de masse après 2000 cycles est de 21% soit environ 3 fois celle de l'élément 1, à 8% sans agents mouillants. Une simple addition d'eau permet de compenser les pertes massiques plus fortes et de démontrer un plus grand nombre de cycle à l'aide de l'addition des agents mouillants et antimousse dans l'électrolyte.

### Exemple 3 (témoin et invention) :

L'élément 5 (témoin) de capacité nominale 8Ah est réalisé de manière identique suivant la description générale fournie ci-dessus. Il est identique à l'élément 1 concernant les électrodes de nickel et la membrane A, en revanche ses électrodes de zinc sont d'une composition différente. L'électrolyte utilisé est une solution concentrée alcaline dont la molarité est 10M d'anions hydroxyles avec une addition de silicate comme décrit dans le brevet FR 3 099 851.

L'élément 6 (invention) est identique à l'élément 5, mais avec une addition à l'électrolyte de 4 agents mouillants parmi lesquels 3 sont de la marque TRITON, le BG-10, CG-110, X-100 plus l'agent mouillant phosphate de bis(2-éthylhexyle). La concentration totale des 4 agents mouillants est 21,3 g/l. Un agent antimousse de la famille chimique des polyorganosiloxanes est ajouté à l'électrolyte à raison de 100mg par kilogramme d'électrolyte.

L'élément 7 (invention) est identique à l'élément 5, mais avec une addition à l'électrolyte de 2 agents mouillants de la marque TRITON^{®}, le BG-10 et le X-100. La concentration totale des 2 agents mouillants est 21,3g/l. Un agent antimousse de la famille chimique des polyorganosiloxanes est ajouté à l'électrolyte à raison de 100mg par kilogramme d'électrolyte.

Ces trois accumulateurs ont été cyclés à courant constant 8A, équivalent au régime de C avec une charge d'une heure et une décharge qui se termine quand la tension atteint 1V. Les capacités déchargées en fonction du nombre de cycles pour les accumulateurs 5, 6 et 7 sont comparées sur la figure 2.

L'addition des agents mouillants améliore le nombre de cycles par rapport à l'élément 5 de 44% pour l'élément 6 avec 2500 cycles et de 95% pour l'élément 7 avec 3400 cycles. L'addition de l'agent antimousse a permis de réduire fortement la formation de mousse. La perte de masse après 2000 cycles pour les éléments 5, 6 et 7 est de respectivement 18%, 57% et 45%, soit un facteur d'environ 2 à 3 entre éléments avec et sans agents mouillants. Une simple addition d'eau permet de compenser les pertes massiques plus fortes et de démontrer un plus grand nombre de cycle à l'aide de l'addition des agents mouillants et antimousse dans l'électrolyte.

### Exemple 4 (invention) :

Pour limiter la formation de mousse liée à l'addition des agents mouillants, la quantité d'agent antimousse est doublée, passant de 100 mg à 200 mg par kilogramme d'électrolyte.

Pour limiter les pertes de masse, la quantité d'agents mouillants est par ailleurs réduite.

Une nouvelle série de trois éléments permettent d'évaluer le résultat d'addition d'agents mouillants en plus faibles quantités, 10,65 g/l, 7,1 g/l et 5,3 g/l respectivement pour les éléments 8, 9 et 10.

Les éléments 8, 9 et 10 sont identiques à l'élément 5, exceptées les additions des agents mouillants et antimousse. Ces accumulateurs ont été cyclés à courant constant 8A, équivalent au régime de C avec une charge d'une heure et une décharge qui se termine quand la tension atteint 1V.

Les nombres de cycles obtenus, reportés au tableau 1, de 1740, 2120, 2220, 2520 et 2500 respectivement pour les éléments 5, 8, 9, 10 et 6, démontrent qu'il est possible de préserver l'action des agents mouillants avec des concentrations plus faibles. Avec ces concentrations plus faibles et le doublement de la masse d'antimousse, la formation de mousse et les pertes de masse sont sensiblement réduites avec après 2000 cycles 11,8%, 9,3% et 13% respectivement pour les éléments 8, 9 et 10.

### Exemple 5 (invention) :

Nos analyses suggèrent que le décrochage des agents mouillants de la membrane est susceptible d'être accéléré par des recombinaisons fortes d'oxygène à la surface de l'électrode de zinc. Parfois, les dégagements de chaleur associés à cette réaction se traduisent par des diminutions en fin de charge de la tension des accumulateurs, communément nommées dans l'état de l'art "delta V négatif".

Pour limiter ce phénomène, la structure des électrodes de zinc a été légèrement modifiée pour l'élément 11.

Hormis cette modification, l'élément 11 est identique à l'élément 8 et similaire aux éléments 5 et 6, avec une addition de 4 agents mouillants dans l'électrolyte, parmi lesquels 3 sont de la marque TRITON^{®}, le BG-10, CG-110, X-100, plus l'agent mouillant phosphate de bis(2-éthylhexyle). La concentration totale des 4 agents mouillants est dans l'élément 11 de 10,65g/l, réduite de moitié par rapport à celle de l'élément 6. Un agent antimousse de la famille chimique des polyorganosiloxanes est ajouté à l'électrolyte à raison de 200 mg par kilogramme d'électrolyte, soit un doublement par rapport à l'élément 6.

L'accumulateur 11 a été cyclé à courant constant 8A, équivalent au régime de C avec une charge d'une heure et une décharge qui se termine quand la tension atteint 1V.

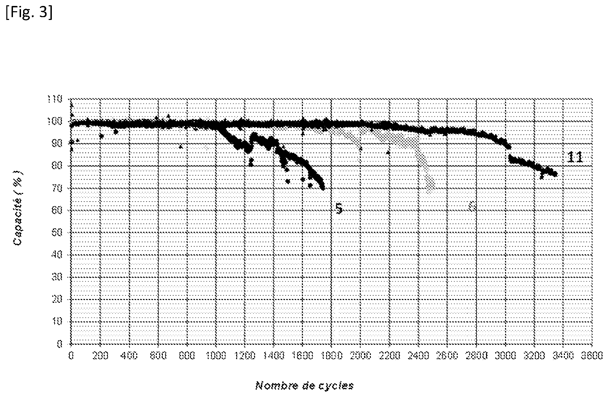

Les capacités déchargées en fonction du nombre de cycles pour les accumulateurs 5, 6 et 11 sont comparées en figure 3.

Suivant cette combinaison, la stabilité de la capacité de l'élément 11 progresse encore avec plus de 3350 cycles, le test étant toujours en cours. La perte de masse après 2000 cycles pour les éléments 5, 6 et 11 est de respectivement 18%, 57% et 4%, démontrant que la formation de mousse et la perte de masse associée à l'addition des agents mouillants sont améliorées et compatibles avec une addition d'eau repoussée à un plus grand nombre de cycles.

Par rapport aux résultats mesurés sur l'élément 8, l'amélioration de comportement de l'élément 11 - perte de masse à 2000 cycles réduite de 65% et nombre de cycles accru d'au moins 55% - met en évidence une stabilisation renforcée associée pour les auteurs de la présente invention à une réduction des conséquences induites de la recombinaison de l'oxygène, et donc à une meilleure préservation des agents mouillants, tant dans l'électrolyte que dans la membrane.

A travers les nombreuses expérimentations conduites par les auteurs de la présente invention, dont celles présentées dans le tableau 1 ne constituent qu'une partie, il apparaît que les choix de concentrations en agents mouillants et agents antimousse peuvent s'effectuer favorablement dans de larges gammes. Les concentrations optimales sont notamment dépendantes des caractéristiques des membranes mises en œuvre, du niveau d'alcalinité de l'électrolyte, des formulations et modes de réalisation des électrodes, des configurations d'accumulateurs et des conditions de régimes de cyclage. Il a ainsi été montré que les concentrations globales en agents mouillants peuvent avantageusement se situer entre environ 0.1 et 50g par litre d'électrolyte, et celles d'agents antimousse entre environ 10 et 1000mg par kilogramme d'électrolyte.

Au niveau de l'électrode de zinc, le zinc métallique se forme lors de la charge par réduction des ions zincates présents dans la solution. Le dépôt de zinc va incorporer dans sa masse des particules présentes à l'endroit de sa germination.

Lors de la décharge de l'électrode de zinc, le zinc se transforme en ions zincates, dénudant partiellement sa surface avant que celle-ci soit à nouveau recouverte par le dépôt d'oxyde de zinc caractérisant la matière active anodique à l'état déchargé. Lors de l'étape de dénudement, des espèces déposées ou emprisonnées dans le zinc peuvent être également libérées dans l'électrolyte et se redéposer sur place ou ailleurs, comme en particulier sur la membrane.

Cette libération dans l'électrolyte est favorisée en cas d'affinité faible entre le zinc et l'agent mouillant, ce qui est le cas avec les agents mouillants non ioniques. La membrane étant à proximité immédiate de la surface de l'électrode de zinc, ce mécanisme est susceptible d'alimenter la membrane en d'agents mouillants et de stabiliser dans le temps ses propriétés hydrophiles.

Ce phénomène s'apparente à un mécanisme d'autoréparation de la membrane.

## Revendications

1. Générateur électrochimique alcalin à anode de zinc contenant un électrolyte qui est une solution aqueuse alcaline dont la molarité est comprise entre 4M et 15M d'anions hydroxyles et qui comprend :
a) au moins un agent mouillant à une concentration comprise entre 0,1 g/l et 50 g/l d'électrolyte ; et
b) au moins un agent antimousse en une quantité comprise entre 10 mg et 1000 mg par kilogramme d'électrolyte ;
**caractérisé en ce que** :
- l'électrolyte comprend l'agent mouillant ionique qui est le phosphate de bis(2-éthylhexyle) ; et/ou
- l'électrolyte comprend au moins un agent mouillant non ionique choisi parmi les polyglucosides d'alkyle et les éthers de polyéthylène glycol et d'alkylphénol ; et/ou
- les agents antimousse sont choisis parmi les polyorganosiloxanes.

2. Générateur électrochimique alcalin à anode de zinc selon la revendication 1, comprenant au moins un agent mouillant ionique et au moins un agent mouillant non ionique.

3. Générateur électrochimique alcalin à anode de zinc selon l'une des revendications 1 et 2, dans lequel la molarité de la solution alcaline est comprise entre 7 et 12 M.

4. Générateur électrochimique alcalin à anode de zinc selon l'une des revendications 1 à 3, dans lequel la concentration du ou des agents mouillants dans l'électrolyte est comprise entre 1 g/l et 25 g/l.

5. Générateur électrochimique alcalin à anode de zinc selon l'une des revendications 1 à 4, dans lequel la concentration des agents antimousse dans l'électrolyte est de 100 mg à 500 mg par kilogramme d'électrolyte.

6. Générateur électrochimique alcalin à anode de zinc selon l'une des revendications 1 à 5, dans lequel l'électrolyte contient en outre des silicates.

7. Générateur électrochimique alcalin à anode de zinc selon l'une des revendications 1 à 6, dans lequel l'électrolyte contient en outre des zincates.

8. Générateur électrochimique alcalin à anode de zinc selon l'une des revendications 1 à 7, dans lequel l'électrolyte contient en outre des borates, des phosphates et/ou des fluorures.

9. Procédé de préparation d'un générateur électrochimique alcalin à anode de zinc selon l'une des revendications 1 à 8, comprenant une étape d'introduction d'hydroxydes de lithium, de sodium et/ou de potassium lors de la préparation de l'électrolyte.

## Patentansprüche

1. Alkalischer elektrochemischer Generator mit Zinkanode, der einen Elektrolyten enthält, bei dem es sich um eine wässrige alkalische Lösung mit einer Molarität zwischen 4 M und 15 M Hydroxylanionen handelt und der umfasst:
a) mindestens ein Benetzungsmittel in einer Konzentration zwischen 0,1 g/l und 50 g/l Elektrolyt; und
b) mindestens ein Antischaummittel in einer Menge zwischen 10 mg und 1000 mg pro Kilogramm Elektrolyt;
**dadurch gekennzeichnet, dass:**
- der Elektrolyt das ionisches Benetzungsmittel Bis(2-ethylhexyl)phosphat umfasst;
und/oder
- der Elektrolyt mindestens ein nichtionisches Benetzungsmittel umfasst, das ausgewählt ist aus Alkylpolyglucosiden und Polyethylenglykol- und Alkylphenolethern; und/oder
- die Antischaummittel aus Polyorganosiloxanen ausgewählt sind.

2. Alkalischer elektrochemischer Generator mit Zinkanode nach Anspruch 1, umfassend mindestens ein ionisches Benetzungsmittel und mindestens ein nichtionisches Benetzungsmittel umfasst.

3. Alkalischer elektrochemischer Generator mit Zinkanode gemäß einem der Ansprüche 1 und 2, wobei die Molarität der alkalischen Lösung zwischen 7 und 12 M liegt.

4. Alkalischer elektrochemischer Generator mit Zinkanode gemäß einem der Ansprüche 1 bis 3, wobei die Konzentration des oder der Benetzungsmittel im Elektrolyten zwischen 1 g/l und 25 g/l liegt.

5. Alkalischer elektrochemischer Generator mit Zinkanode gemäß einem der Ansprüche 1 bis 4, wobei die Konzentration der Antischaummittel im Elektrolyten 100 mg bis 500 mg pro Kilogramm Elektrolyt beträgt.

6. Alkalischer elektrochemischer Generator mit Zinkanode gemäß einem der Ansprüche 1 bis 5, wobei der Elektrolyt zusätzlich Silikate enthält.

7. Alkalischer elektrochemischer Generator mit Zinkanode gemäß einem der Ansprüche 1 bis 6, wobei der Elektrolyt außerdem Zinkate enthält.

8. Alkalischer elektrochemischer Generator mit Zinkanode gemäß einem der Ansprüche 1 bis 7, wobei der Elektrolyt außerdem Borate, Phosphate und/oder Fluoride enthält.

9. Verfahren zur Herstellung eines alkalischen elektrochemischen Generators mit Zinkanode gemäß einem der Ansprüche 1 bis 8, umfassend einen Schritt des Einführens von Lithium-, Natrium- und/oder Kaliumhydroxiden bei der Herstellung des Elektrolyten.

## Claims

1. Alkaline electrochemical generator with a zinc anode containing an electrolyte which is an alkaline aqueous solution with a molarity of between 4M and 15M of hydroxyl anions and which comprises:
a) at least one wetting agent at a concentration of between 0.1 g/l and 50 g/I of electrolyte; and
b) at least one antifoaming agent in an amount between 10 mg and 1000 mg per kilogram of electrolyte;
**characterised in that:**
- the electrolyte comprises the ionic wetting agent which is bis(2-ethylhexyl) phosphate; and/or
- the electrolyte comprises at least one non-ionic wetting agent selected from alkyl polyglucosides and polyethylene glycol alkylphenol ethers; and/or
- the anti-foaming agents are selected from polyorganosiloxanes.

2. Alkaline electrochemical generator with a zinc anode according to claim 1, comprising at least one ionic wetting agent and at least one non-ionic wetting agent.

3. Alkaline electrochemical generator with a zinc anode according to one of claims 1 and 2, wherein the molarity of the alkaline solution is between 7 and 12 M.

4. Alkaline electrochemical generator with a zinc anode according to one of claims 1 to 3, wherein the concentration of the wetting agent(s) in the electrolyte is between 1 g/l and 25 g/l.

5. Alkaline electrochemical generator with a zinc anode according to one of claims 1 to 4, wherein the concentration of antifoaming agents in the electrolyte is 100 mg to 500 mg per kilogram of electrolyte.

6. Alkaline electrochemical generator with a zinc anode according to one of claims 1 to 5, wherein the electrolyte further contains silicates.

7. Alkaline electrochemical generator with a zinc anode according to one of claims 1 to 6, wherein the electrolyte further contains zincates.

8. Alkaline electrochemical generator with a zinc anode according to one of claims 1 to 7, wherein the electrolyte further contains borates, phosphates and/or fluorides.

9. Process for preparing an alkaline electrochemical generator with a zinc anode according to one of claims 1 to 8, comprising a step of introducing lithium, sodium and/or potassium hydroxides during the preparation of the electrolyte.
